# EUROPÄISCHE PATENTSCHRIFT

(11) **EP 1 809 928 B1**
(45) Veröffentlichungstag und Bekanntmachung des Hinweises auf die Patenterteilung: **07.01.2009**
(21) Anmeldenummer: 05807949.2
(22) Anmeldetag: 08.11.2005
(51) Int. Cl.: F16H 59/04, F16H 59/02, G05G 1/02, G05G 1/08

(54) **BETÄTIGUNGSEINRICHTUNG MIT DREHSCHALTER**
ACTUATING DEVICE COMPRISING A ROTARY SWITCH
DISPOSITIF D'ACTIONNEMENT A COMMUTATEUR ROTATIF

(30) Priorität: 09.11.2004 DE 102004054264
(43) Veröffentlichungstag der Anmeldung: 25.07.2007
(73) Patentinhaber: ZF Friedrichshafen AG, 88038 Friedrichshafen (DE)
(72) Erfinder: MEYER, Jörg, 49419 Wagenfeld (DE); GIEFER, Andreas, 49448 Lemförde (DE)
(86) Internationale Anmeldenummer: PCT/DE2005/002008
(87) Internationale Veröffentlichungsnummer: WO 2006/050702

(56) Entgegenhaltungen:
- EP-A- 1 141 587
- EP-A- 1 215 555
- EP-A- 1 347 242
- DE-A1- 10 217 614
- DE-A1- 19 706 625
- DE-A1- 19 747 269
- US-A- 2 926 762
- US-A1- 2004 025 613

## Beschreibung

Die Erfindung betrifft eine Einrichtung zur Betätigung eines technischen Systems gemäß dem Oberbegriff des Patentanspruchs 1.

Gattungsgemäße Einrichtungen kommen beispielsweise, jedoch keineswegs ausschließlich, zur manuellen Betätigung bzw. Gangvorwahl bei Gangwechselgetrieben von Kraftfahrzeugen zum Einsatz.

Bei einer zunehmenden Anzahl von Kraftfahrzeugen erfolgt die Gangvorwahl bzw. Steuerung des Betriebszustands des Fahrzeuggetriebes mittels elektrischer bzw. elektronischer Signalgebung. Die ohne mechanische Verbindung zwischen dem Betätigungselement und der zu steuernden Vorrichtung, beispielsweise eines automatischen Schaltgetriebes eines Kraftfahrzeugs, auskommende elektrische bzw. elektronische Ansteuerung derartiger Systeme bringt es mit sich, dass vom Fahrer keine nennenswerten Bedienkräfte in das Betätigungselement mehr eingeleitet und insbesondere nicht mechanisch zum Getriebe übertragen werden müssen.

Aus dem Stand der Technik sind Betätigungseinrichtungen bekannt, bei denen die Betätigung trotz Wegfalls der Notwendigkeit zur mechanischen Kraftübertragung zu dem gesteuerten technischen System nach wie vor mit verhältnismäßig raumgreifenden, großen Bedienhebeln erfolgt. So werden nach wie vor zahlreiche Fahrzeuggetriebe mit unterschiedlichen Ausprägungen des klassischen Schaltknaufs bzw. Automatikwählhebels geschaltet bzw. gesteuert, obwohl wegen der bereits eingesetzten shift-by-wire-Bauweise gar keine Kraftübertragung mehr zwischen Bedienhebel und Fahrzeuggetriebe erfolgt.

Dies ist in verschiedener Hinsicht mit Nachteilen verbunden. So ist beispielsweise die Art und der Ort der Anbringung des Bedienhebels für ein Kraftfahrzeuggetriebe aufgrund des erheblichen Raumbedarfs derartiger Schalthebel deutlich eingeschränkt und im Wesentlichen auf die übliche Unterbringung des Schalthebels im Bereich der Mittelkonsole bzw. zwischen den Vordersitzen des Kraftfahrzeugs beschränkt. Damit einher gehen konstruktive Einschränkungen, und es wird die gestalterische Freiheit des Fahrzeugdesigners im Wesentlichen auf die üblichen Anbringungsorte für den Schalthebel reduziert. Nicht selten ist der aus der Mittelkonsole herausragende Schalthebel auch von Nachteil bezüglich der Bewegungsfreiheit für die Fahrzeuginsassen.

Auch bezüglich der Sicherheit am Kraftfahrzeug sind die klassischen Schalt bzw. Wählhebel oft nachteilig. So kann sich beispielsweise bei Bewegungen die Kreidung des Fahrers oder Beifahrers am Schalthebel verfangen und die Aufmerksamkeit des Fahrers auf das Straßengeschehen beeinträchtigen, oder gar zu unerwünschten Schaltvorgängen führen.

Ein weiteres, häufig ebenfalls sicherheitsrelevantes Problem bei der Betätigung technischer Systeme mittels klassischer Bedienhebel liegt darin, dass es im Fall mehrerer vorhandener Schaltstellungen am Bedienhebel verhältnismäßig leicht vorkommen kann, dass Zwischenstellungen des Schalthebels verfehlt bzw. unbeabsichtigt überschaltet werden. Dies ist insbesondere dann der Fall, wenn das jeweilige Bedienelement bzw. der jeweilige Schalthebel mehrere Schaltstellungen einnehmen kann, die im Wesentlichen linear hintereinander angeordnet sind.

Insbesondere bei modernen Kraftfahrzeugen mit den dort eingesetzten, immer stärker untereinander vernetzten technischen Systemen tritt ferner auch immer häufiger die Situation auf, dass technische Systeme, wie beispielsweise Fahrzeuggetriebe, ihren Betriebs- bzw. Schaltzustand ohne unmittelbare Einwirkung des Fahrers selbsttätig an veränderte Rahmenbedingungen anpassen und verändern. So ist es beispielsweise nicht ungebräuchlich, dass ein by-wire-gesteuertes Fahrzeuggetriebe beim Abstellen des Motors und nach dem Abziehen des Zündschlüssels, oder sobald der Fahrer das Fahrzeug verlässt, selbsttätig eine bestimmte Betriebsstellung, beispielsweise die Schaltposition "P" (Parksperre) einnimmt.

Falls das Fahrzeug mit einem gebräuchlichen Getriebe-Betätigungselement, wie beispielsweise mit einem Automatikwählhebel ausgestattet ist, so verbleibt jedoch der Wählhebel auch im Fall der selbsttätig eingelegten Schaltposition "P" in der zuvor vom Fahrer manuell gewählten Schaltposition, beispielsweise in "N". Der Bedienhebel signalisiert somit fälschlicherweise durch seine unveränderte Position in der "N"-Stellung, dass sich das Getriebe in der Schaltposition "N" befindet, während sich das Getriebe jedoch aufgrund der automatischen Aktivierung der Parksperre tatsächlich in der Schaltposition "P" befindet. Wenn dies im hier gewählten Beispielfall auch nicht unmittelbar zu einem Sicherheitsrisiko führen mag, so verbleibt doch zumindest das Problem, dass sich der Wählhebel beim nächsten Fahrtantritt in der "N"-Stellung befindet, weshalb Schwierigkeiten oder Unklarheiten bei der Einlegung der gewünschten Fahrstufe auftreten könnten.

Schließlich sind die bekannten Schalthebel bzw. Automatikwählhebel auch noch nachteilig in Bezug auf das Crashverhalten, da von derartigen vorstehenden Betätigungselementen im Crashfall erhebliche Verletzungsrisiken, insbesondere bezüglich eines etwaigen Kopfaufpralls ausgehen können.

Wie leicht ersichtlich ist, stellen die genannten Fälle aus dem Bereich des Kraftfahrzeugs bzw. der Schaltgetriebesteuerung lediglich Beispiele für allgemein anwendbare Zusammenhänge bei der Mensch-Maschine-Interaktion im Fall elektronisch gesteuerter, technischer Systeme dar, bei denen die Betätigungselemente nicht mehr mit mechanischen Gestängen oder Wellen, sondern nur noch über elektrische bzw. elektronische Signale mit dem zu steuernden System in Verbindung stehen.

Eine Betätigungseinrichtung gemäß den Oberbegrift des Anspruchs 1 ist aus der DE 102 17614 A bekannt.

Es ist mit diesem Hintergrund Aufgabe der vorliegenden Erfindung, eine Einrichtung zur by-wire-Betätigung eines technischen Systems, beispielsweise eines Gangwechselgetriebes zu schaffen, mit der sich die genannten Nachteile des Standes der Technik überwinden lassen. Insbesondere soll die Betätigungseinrichtung die Freiheit bei Gestaltung und Anordnung des Betätigungselements vergrößern, wobei die Betätigungseinrichtung zugleich intuitiv und möglichst selbsterklärend für den Bediener sein soll. Ein Schwerpunkt soll auch auf der unzweideutigen taktilen Rückmeldung des Schalt bzw. Systemzustands bei der Bedienung des entsprechenden Betätigungselements liegen. Schließlich soll insbesondere die Gefahr des unerwünschten Überschaltens von Zwischenstellungen des Betätigungselements wirksam unterbunden werden, und die Problematik selbsttätiger Veränderungen des Systemzustands bei unveränderter Stellung des Betätigungselements soll behoben werden.

Diese Aufgabe wird durch eine Betätigungseinrichtung mit den Merkmalen des Patentanspruchs 1 gelöst Bevorzugte Ausführungsformen sind Gegenstand der Unteransprüche.

Die Betätigungseinrichtung gemäß der vorliegenden Erfindung ist insbesondere zur manuellen Betätigung eines shift-by-wire-fähigen Gangwechselgetriebes, beispielsweise des Automatikgetriebes eines Kraftfahrzeugs vorgesehen, und umfasst in an sich zunächst bekannter Weise ein Betätigungselement mit zumindest drei Schaltstellungen, unter denen sich eine Grundstellung befindet. Dabei ist das Betätigungselement zum Zweck des Auswählens eines Betriebszustands des technischen Systems ausgehend von seiner Grundstellung zumindest in eine Richtung in eine Zwischenschaltstellung auslenkbar. Zum Auswählen zumindest eines weiteren Betriebszustands des technischen Systems ist das Betätigungselement, ausgehend von einer Zwischenschaltstellung in eine weitere Schaltstellung auslenkbar, wobei letztere Schaltstellung von der Grundstellung weiter entfernt ist als erstere Zwischenschaltstellung.

Erfindungsgemäß jedoch zeichnet sich die Betätigungseinrichtung dadurch aus, dass das Betätigungselement ein Drehschalter ist, wobei sich der Drehschalter aus allen Schaltstellungen selbsttätig in die Grundstellung zurückstellt. Dabei umfasst die Betätigungseinrichtung eine Sperranordnung gegen ungewollte Auslenkung des Drehschalters über eine Zwischenschaltstellung hinaus in eine weitere Schaltstellung.

Die Ausführung des Betätigungselements der Betätigungseinrichtung als Drehschalter berücksichtigt insbesondere die Tatsache, dass bei elektrisch bzw. elektronisch betätigbaren technischen Systemen, wie beispielsweise bei shift-by-wire-Getrieben, keinerlei mechanischen Kräfte zwischen Betätigungselement und dem technischen System mehr zu übertragen sind. Dies ist insofern vorteilhaft, als ein Drehschalter mit erheblich größerem konstruktiven und gestalterischem Freiraum ausgeführt sowie wegen seines geringen Platzbedarfs und der optimal an die Hand anpassbaren Ergonomie nahezu beliebig im Griffbereich des Bedieners bzw. Fahrers angeordnet werden kann.

Der Drehschalter der erfindungsgemäßen Betätigungseinrichtung stellt sich zudem aus allen Schaltstellungen selbsttätig in die Grundstellung zurück. Somit kann die oben beschriebene Konstellation eines selbsttätig veränderten Systemzustands (beispielsweise die automatische eingelegte Parksperre beim Verlassen des Fahrzeugs) bei gleichzeitig unveränderter Stellung des Betätigungselements nicht mehr dazu führen, dass durch die Stellung des Betätigungselements irreführenderweise ein tatsächlich nicht vorhandener Schaltzustand des technischen Systems bzw. Fahrzeuggetriebes signalisiert wird. Vielmehr befindet sich der Drehschalter unabhängig vom Schaltzustand des technischen Systems bzw. Fahrzeuggetriebes erfindungsgemäß stets in seiner Grundstellung, solange er nicht betätigt wird.

Die außerdem bei der erfindungsgemäßen Betätigungseinrichtung vorhandene Sperranordnung des Drehschalters vermeidet das oben beschriebene, ungewollte Überschalten von Zwischenpositionen bzw. Zwischenschaltstellungen des Drehschalters und führt zudem zu einer intuitiven Bedienbarkeit dank klarer taktiler Führung bzw. Rückmeldung beim Anwählen der einzelnen Schaltstellungen am Drehschalter. die Sperranordnung bei Auslenkung des Drehschalters ausgehend von einer Zwischenschaltstellung in eine weitere Schaltstellung eine größere Gegenkraft als bei der vorhergehenden Auslenkung des Drehschalters in die Zwischenschaltstellung; bzw. es ist zur Auslenkung des Drehschalters in die weitere Schaltstellung eine merklich größere Schaltarbeit (Kraft-Weg-Integral) erforderlich als zur Auslenkung des Drehschalters in die Zwischenschaltstellung.

Dies führt in vorteilhafter Weise dazu, dass auch dann die tatsächlich vom Bediener bzw. Fahrer beabsichtigte Zwischenschaltstellung eingelegt wird bzw. eingelegt bleibt, wenn irrtümlicherweise zu schnell oder mit etwas zu großer Kraft am Drehschalter gedreht wurde, da in einem solchen Fall die von der Sperranordnung bereitgestellte Gegenkraft wie eine bremsende Rampe für die Bewegung des Drehschalters und der betätigenden Hand wirkt

Gemäß der vorliegenden Erfindung ist der Drehschalter zusätzlich zu seiner Drehbarkeit im Wesentlichen linear entlang zumindest einer weiteren Bewegungsrichtung bewegbar. Dabei verläuft die weitere Bewegungsrichtung verschieden von der Drehbewegungsrichtung, insbesondere in radialer oder axialer Richtung bezogen auf den Drehschalter. Die Bewegbarkeit des Drehschalters entlang der weiteren Bewegungsrichtung kann vorteilhaft beispielsweise zur Steuerung weiterer Funktionen desselben technischen Systems, oder aber zur zusätzlichen Steuerungsmöglichkeit einer anderen Vorrichtung herangezogen werden.

Insbesondere jedoch ist die Bewegbarkeit des Drehschalters entlang der zumindest einen weiteren Bewegungsrichtung im Zusammenhang mit der Sperranordnung der erfindungsgemäßen Betätigungseinrichtung. Hierbei umfasst die Sperranordnung eine Kulisseneinrichtung, wobei die Kulisseneinrichtung für die Auslenkung des Drehschalters ausgehend von einer Zwischenschaltstellung in eine weitere Schaltstellung eine Auslenkung des Drehschalters entlang der weiteren Bewegungsrichtung erfordert.

Dies bedeutet mit anderen Worten, dass durch die Kulisseneinrichtung der Sperranordnung ein ungewolltes Überschalten von Zwischenschaltstellungen durch zu schnelles oder zu kräftiges Drehen am Drehschalter vollkommen ausgeschlossen wird. Denn die zur Auslenkung des Drehschalters hin zur Zwischenschaltstellung erforderliche Bewegungsrichtung des Drehschalters bzw. der betätigenden Hand unterscheidet sich aufgrund des Vorhandenseins von Sperranordnung und Kulisseneinrichtung von derjenigen Bewegungsrichtung des Drehschalters bzw. der Hand, die zur Auslenkung des Drehschalters von der Zwischenschaltstellung in die weitere Schaltstellung zu erfolgen hat.

Die Kulisseneinrichtung kann hierzu beispielsweise so ausgeführt sein, dass die Auslenkung des Drehschalters in die Zwischenschaltstellung in Form einer einfachen Drehbewegung am Drehschalter erfolgt, während zur Auslenkung des Drehschalters von der Zwischenschaltstellung in die weitere Schaltstellung eine im Wesentlichen lineare Bewegung des gesamten Drehschalters entlang einer Radial- oder Axialrichtung des Drehschalters erfolgen muss. Ebenso gut kann zur Bewegung des Drehschalters von der Zwischenschaltstellung in die weitere Schaltstellung zunächst sowohl eine lineare Bewegung als auch sodann eine weitere Drehbewegung erforderlich sein.

Nach weiteren Ausführungsformen der Erfindung ist vorgesehen, dass die Betätigungseinrichtung mit einer Anzeigeeinrichtung verbunden ist, beispielsweise mit einer separaten Anzeigeeinrichtung im Bereich des Armaturenbretts, oder dass die Betätigungseinrichtung selbst eine Anzeigeeinrichtung umfasst, die beispielsweise im unmittelbaren Bereich des Betätigungselements angeordnet sein kann.

Betätigungseinrichtungen mit eigener Anzeigeeinrichtung sind vorteilhaft insbesondere bei der Betätigung solcher technischer Systeme, deren Betriebszustand für den Bediener nicht unmittelbar ersichtlich ist, wie dies auch beispielsweise bei Fahrzeuggetrieben der Fall ist. Die Anzeigeeinrichtung dient dann beispielsweise dazu, im unmittelbaren Bereich des Betätigungselements bzw. Drehschalters, mit dem ein Kraftfahrzeuggetriebe gesteuert wird, den derzeitigen Schalt-bzw. Betriebszustand des Getriebes zu signalisieren. Eine derartige Anzeigeeinrichtung ist besonders vorteilhaft bei solchen Betätigungselementen, die sich wie im vorliegenden Fall stets selbsttätig in die Grundstellung zurückstellen, da aus der Position des Betätigungselements selbst nicht auf den Betriebszustands des damit gesteuerten technischen Systems bzw. Fahrzeuggetriebes geschlossen werden kann bzw. soll.

Ferner kann auf diese Weise auch ein etwaiger selbsttätig eingenommener Betriebszustand des Systems bzw. Fahrzeuggetriebes - beispielsweise eine automatisch eingelegte Parksperre beim Verlassen des Fahrzeugs - ohne weiteres durch die Anzeigeeinrichtung berücksichtigt und jederzeit korrekt angezeigt werden. Dabei werden die eingangs beschriebenen Probleme mit der Position der zusätzlich auch als Anzeige herangezogenen Betätigungselemente aus dem Stand der Technik, die im geschilderten Fall nicht immer mit dem Betriebszustand des gesteuerten Systems übereinstimmt, vollständig beseitigt.

Gemäß einer weiteren, bevorzugten Ausführungsform der Erfindung ist es ferner vorgesehen, dass die Anzeige des gegenwärtig angewählten Betriebszustands des Systems bzw. Getriebes wie auch die Anzeige jedes weiteren anwählbaren Betriebszustands immer an derselben Stelle der Anzeigeeinrichtung dargestellt ist. Damit lässt sich mit einem Blick erfassen, in welchem Betriebszustand sich das System bzw. Getriebe momentan befindet, zudem erfolgt so die Anwählung jedes weiteren Betriebszustands des Systems bzw. Getriebes unabhängig vom momentanen Betriebszustand immer auf die gleiche Weise bzw. mit demselben Bewegungsablauf, was der intuitiven Bedienbarkeit der Betätigungseinrichtung entgegenkommt

Nach einer weiteren bevorzugten Ausführungsform der Erfindung ist der Drehschalter entlang seiner Axialrichtung in eine Ausnehmung einer Konsole versenkbar. Besonders bevorzugt weist dabei die Betätigungseinrichtung eine motorisch antreibbare Einrichtung zur Bewegung des Drehschalters entlang seiner Axialrichtung auf.

Diese Ausführungsform der Erfindung weist insbesondere den Vorteil auf, dass eine gegebenenfalls automatisch gesteuerte Versenkbewegung des Drehschalters in die Ausnehmung beispielsweise der Mittelkonsole eines Kraftfahrzeugs erfolgen kann. Diese Eigenschaft der Betätigungseinrichtung lässt sich einerseits gestalterisch nutzen und verbessert damit Ergonomie und Komfort im Kraftfahrzeug.

Andererseits kann der in der Konsole versenkbare Drehschalter auch als unmittelbar verständliche Betriebsanzeige des damit gesteuerten Systems bzw. des Fahrzeuggetriebes herangezogen werden. Ein in der Mittelkonsole versenkter Drehschalter kann somit beispielsweise bedeuten, dass das damit gesteuerte System bzw. Kraftfahrzeuggetriebe nicht betriebsbereit ist - beispielsweise bei nicht eingeschalteter Zündung, bei noch geöffneten Türen oder dgl. - während der aus der Mittelkonsole ausgefahrene Drehschalter die Betriebsbereitschaft des Systems bzw. Getriebes sofort verständlich signalisiert.

Im Folgenden wird die Erfindung anhand lediglich Ausführungsbeispiele darstellender Zeichnungen näher erläutert. Dabei zeigt:
- **Fig.1**: in schematischer Darstellung eine Betätigungseinrichtung für ein Fahrzeuggetriebe gemäß den Stand der Technik in der Draufsicht;
- **Fig. 2**: in einer **Fig.1** entsprechenden Darstellung eine Ausführungsform einer erfindungsgemäßen Betätigungseinrichtung;
- **Fig. 3**: in einer **Fig. 1** und **2** entsprechenden Darstellung eine zweite Ausführungsform einer erfindungsgemäßen Betätigungseinrichtung;
- **Fig. 4**: in einer **Fig. 1** bis **3** entsprechenden Darstellung eine Betätigungseinrichtung, die nicht unter der Wortlant des Anspruchs 1 fällt;
- **Fig. 5**: in schematischer isometrischer Darstellung eine Betätigungseinrichtung gemäß **Fig. 3** mit ausgefahrenem Drehschalter; und
- **Fig. 6**: in einer **Fig. 5** entsprechenden Darstellung die Betätigungseinrichtung gemäß **Fig. 3** und **5** mit versenktem Drehschalter.

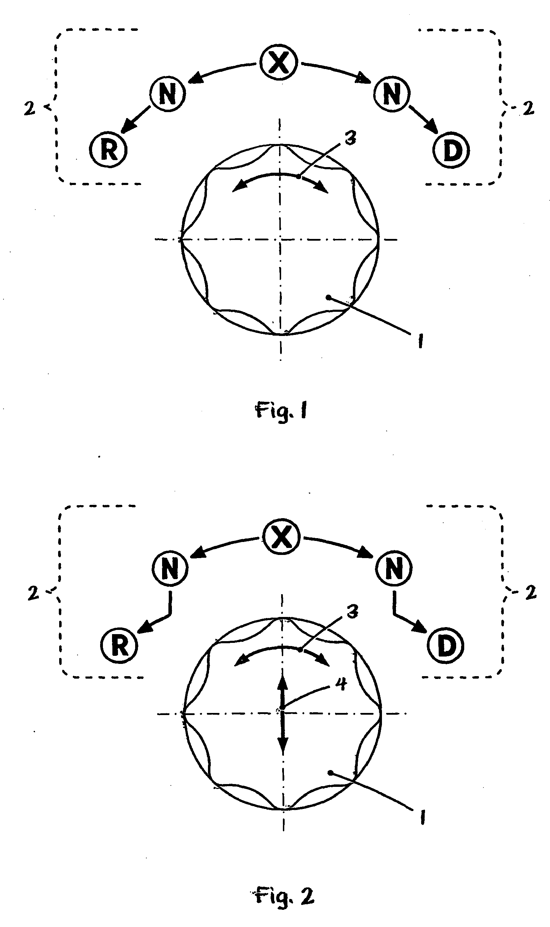

**Fig. 1** zeigt in schematischer Darstellung Drehschalter 1 und Anzeigeeinrichtung 2 einer Betätigungseinrichtung. Bei dieser Ausführungsform handelt es sich um eine Betätigungseinrichtung für ein automatisches Fahrzeuggetriebe.

Man erkennt aus der Darstellung von **Fig.1** zunächst einmal unmittelbar, dass der Drehschalter 1 entlang seiner Drehbewegungsrichtung 3 nach links gedreht werden kann, um ausgehend von einer hier mit "X" gekennzeichneten Ausgangsstellung des Drehschalters 1 die Schaltzustände "N" bzw. "R" auszuwählen, und dass der Drehschalter 1 ferner, ebenfalls entlang seiner Drehbewegungsrichtung 3, auch nach rechts gedreht werden kann, um sodann den Schaltzustand "N" bzw. den Schaltzustand "D" auszuwählen.

Dabei ist die Betätigungseinrichtung so ausgebildet, dass der Drehschalter 1 aus jeder der Schaltstellungen "N", "R" und "D" nach dem Loslassen selbsttätig wieder die Grundstellung bei "X" einnimmt

Die mit Symbol "X" gekennzeichnete mittlere Position der Anzeigeeinrichtung kann dabei insbesondere der Anzeige der jeweils gerade eingelegten Fahrstufe des Fahrzeuggetriebes dienen. Damit lässt sich auf einen Blick der momentane Betriebszustand des Fahrzeuggetriebes bzw. die momentan eingelegte Fahrstufe erfassen.

Soll die momentan eingelegte Fahrstufe des Fahrzeuggetriebes mittels Eingriff durch den Fahrer verändert werden, so erfolgt dies durch Drehen am Drehschalter 1 entweder gegen den Uhrzeigersinn oder mit dem Uhrzeigersinn, entlang der Drehbewegungsrichtung 3. Dabei wird, im gezeigten Ausführungsbeispiel zunächst einmal unabhängig von der gewählten Drehrichtung des Drehschalters 1, die bei "X" jeweils angezeigte momentan eingelegte Fahrstufe entkuppelt und stattdessen die Neutralstellung "N" eingelegt.

Beim Weiterdrehen des Drehschalters 1 über die Neutralstellung "N" hinaus muss zunächst einmal die Gegenkraft der (nicht dargestellten) Sperranordnung der Betätigungseinrichtung überwunden wenden. Dabei ist die Gegenkraft der Sperranordnung bei der Auslenkung des Drehschalters 1 aus der Neutralstellung "N" in eine der Schaltstellungen "R" oder "D" deutlich größer als die zur Auslenkung des Drehschalters 1 aus der Ausgangsstellung "X" in eine der beiden mit der Neutralstellung "N" des Fahrzeuggetriebes assoziierten Zwischenstellungen des Drehschalters 1.

**Fig. 2** zeigt eine Ausführungsform des erfindungsgemäßen Betätigungseinrichtung für ein Fahrzeuggetriebe mit Drehschalter 1. Die Ausführungsform gemäß **Fig. 2** unterscheidet sich von der Betätigungseinrichtung gemäß **Fig. 1** insbesondere dadurch, dass der Drehschalter 1 gemäß **Fig. 2** außer der Drehbewegung 3 um seine Achse zudem auch in einer Radialrichtung 4 bzw. entlang der Ebene der (nicht dargestellten) Fahrzeugkonsole verschoben werden kann. In diesem Zusammenhang unterscheidet sich auch die Sperranordnung der Betätigungseinrichtung gemäß **Fig. 2** von der Sperranordnung der Betätigungseinrichtung gemäß **Fig. 1****.**

Die Darstellung der **Fig. 2** kann ferner auch dahingehend interpretiert werden, dass der Drehschalter 1 gemäß **Fig. 2** außer der Drehbewegung 3 um seine Achse auch - anstelle entlang der Radialrichtung 4 - in der Axialrichtung gedrückt oder gezogen werden, mit anderen Worten entlang seiner Drehachse verschoben werden kann.

Um mit dem Drehschalter 1 gemäß **Fig. 2** ausgehend von der Ausgangsstellung "X" bzw. ausgehend von der momentan eingelegten, jeweils bei "X" angezeigten Fahrstufe, eine der beiden Fahrstufen "R" bzw. "D" einzulegen, muss der Drehschalter 1 demgemäß zunächst bis zu einem Drehanschlag in eine der beiden mit der Neutralstellung "N" des Fahrzeuggetriebes assoziierten Zwischenstellungen entlang seiner Drehbewegungsrichtung 3 verdreht werden.

Infolge der Sperranordnung der Betätigungseinrichtung gemäß **Fig. 2** kann der Drehschalter 1 sodann nicht unmittelbar weiter gedreht werden, da eine entsprechende (nicht dargestellte) Kulisse der Sperranordnung des Drehschalters 1 dies verhindert. Vielmehr muss der Drehschalter 1 für die Auswahl einer der Fahrstufen "R" bzw. "D" zunächst in seiner Radialbewegungsrichtung 4 zeichnungsbezogen nach unten linear verschoben werden, bzw. bei der erwähnten Ausführungsform mit Axialbewegung stattdessen in axialer Richtung gedrückt oder gezogen werden. Erst anschließend erlaubt die Kulisse der Sperranordnung des Drehschalters 1 ein Weiterdrehen des Drehschalters 1 und die Auswahl der gewünschten Fahrstufe "R" bzw. "D". Auf diese Weise wird ein unbeabsichtigtes Überschalten der hier jeweils mit der Neutralstellung "N" des Fahrzeuggetriebes assoziierten Zwischenschaltstellung des Drehschalters 1 unter allen Umständen wirksam verhindert.

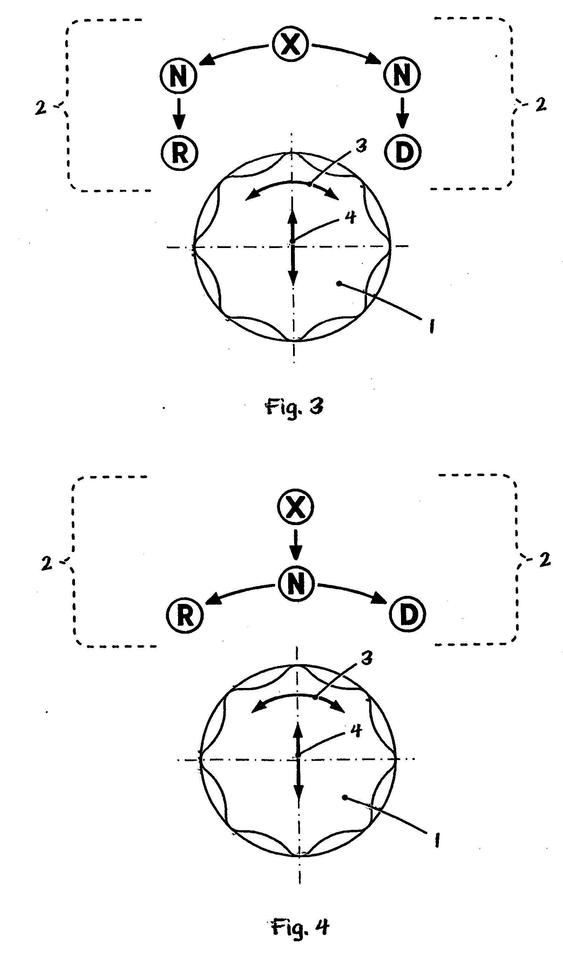

Eine weitere Ausführungsform einer Betätigungseinrichtung mit Drehschalter zur Steuerung eines automatischen Fahrzeuggetriebes ist in **Fig. 3** dargestellt Die Ausführungsform gemäß **Fig. 3** unterscheidet sich von der Ausführungsform gemäß **Fig. 2** im Wesentlichen lediglich dadurch, dass die Auswahl einer der Fahrstufen "R" bzw. "D", ausgehend von der jeweiligen Zwischenschaltstellung "N" des Drehschalters 1, unmittelbar dadurch erfolgt, dass der Drehschalter linear entlang seiner Radialbewegungsrichtung 4 zeichnungsbezogen nach unten verschoben wird.

Die Darstellung der **Fig. 3** kann hier, wie auch bereits bei **Fig. 2****,** wieder dahingehend gedeutet werden, dass die Auswahl einer der Fahrstufen "R" bzw. "D", ausgehend von der jeweiligen Zwischenschaltstellung "N" des Drehschalters 1, anstelle durch Radialbewegung durch axiales Drücken, wahlweise auch Ziehen, des Drehschalters entlang seiner Drehachse erfolgt. Die bei der Ausführungsform gemäß **Fig. 2** im Anschluss an die lineare Verschiebung des Drehschalters 1 zusätzlich noch erforderliche Drehbewegung des Drehschalters 1 entfällt bei der Ausführungsform gemäß **Fig. 3****.**

Eine Betätigungseinrichtung für ein Fahrzeuggetriebe mit Drehschalter ist in Fig. 4 dargestellt, welche nicht unter den Wortlant der Anspruches 1 fällt. Diese Betätigungseinrichtung unterscheidet sich von den vorangegangenen Ausführungsformen insbesondere dadurch, dass lediglich eine Schaltstellung des Drehschalters 1 mit der Neutralposition "N" des Fahrzeuggetriebes assoziiert ist, sowie dadurch, dass der anfänglichen Drehstellung des Drehschalters 1 sowohl die Neutralposition "N" des Fahrzeuggetriebes als auch die Anzeige der momentan eingelegten Fahrstufe "X" zugeordnet ist

Die Auswahl einer der Fahrstufen "R" bzw. "D" erfolgt bei der Betätigugschridutung gemäß **Fig. 4** somit dadurch, dass der Drehschalter 1 ausgehend von seiner Anfangsstellung bzw. Grundstellung zunächst einmal linear nach zeichnungsbezogen unten entlang seiner Radialbewegungsrichtung 4 zu verschieben (oder beispielsweise entlang seiner Axialrichtung einzudrücken) ist. Anschließend ist es infolge der eine entsprechende Kulisse umfassenden Sperranordnung der Betätigungseinrichtung wieder erforderlich, die Bewegungsrichtung zu wechseln und im Anschluss an die Linearbewegung 4 nun eine Drehbewegung 3 des Drehschalters in die gewünschte Richtung auszuführen. Auch auf diese Weise wird jegliches unbeabsichtigte Überschalten der vorliegend mit der Neutralposition "N" des Fahrzeuggetriebes assoziierten Zwischenschaltstellung des Drehschalters 1 effektiv unterbunden.

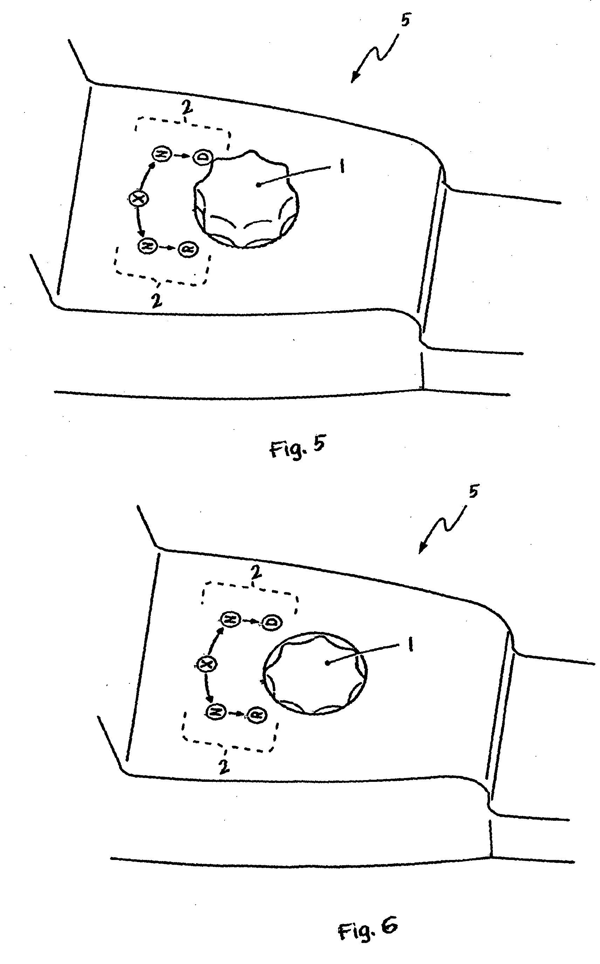

Die **Fig. 5** und 6 zeigen die Ausführungsform gemäß **Fig. 3** im Einbauzustand in der Mittelkonsole 5 eines Kraftfahrzeugs. Dabei befindet sich der Drehschalter 1 zur Betätigung des Fahrzeuggetriebes in der Darstellung der **Fig. 5** im ausgefahren Betriebszustand, womit dem Fahrer unmissverständlich auch die Betriebsbereitschaft des Fahrzeuggetriebes bzw. die Fahrbereitschaft des Fahrzeugs signalisiert wird.

Im Gegensatz dazu ist der Drehschalter 1 in der Darstellung gemäß Fig. 6 in der Mittelkonsole 5 versenkt. Die hierzu erforderliche Versenkbewegung des Drehschalters 1 entlang seiner Drehachse erfolgt mittels eines (nicht dargestellten) automatisch gesteuerten motorischen Antriebs, der sich ebenfalls im Bereich der Mittelkonsole 5 befindet. Durch den versenkten Drehschalter 1 wird dabei dem Fahrer unmittelbar erkenntlich signalisiert, dass das Fahrzeuggetriebe bzw. das Kraftfahrzeug aus bestimmten Gründen nicht betriebsbereit ist, beispielsweise weil die Zündung nicht eingeschaltet ist, oder weil noch nicht sämtliche Türen geschlossen sind.

Im Ergebnis wird damit deutlich, dass dank der Erfindung eine Betätigungseinrichtung für elektrisch bzw. elektronisch gesteuerte technische Systeme geschaffen wird, die insbesondere eine selbsterklärend intuitive und soweit wie möglich fehlerfreie Betätigung des technischen Systems gestattet. Dabei wird insbesondere das unerwünschte Überschalten von Zwischenstellungen des Betätigungselements effektiv unterbunden. Gleichzeitig wird dank der Erfindung eine intuitiv erfassbare taktile Rückmeldung des Schaltzustands des Betätigungselements bzw. des Systemzustands realisiert. Darüberhinaus kann die erfindungsgemäße Betätigungseinrichtung insbesondere bei der Anwendung am Kraftfahrzeug mit besonders großem konstruktivem Freiraum gestaltet und im Innenraum angeordnet werden.

Die Erfindung leistet damit einen erheblichen Beitrag zur Verbesserung der Ergonomie, Sicherheit und Bedienbarkeit von technischen Systemen, insbesondere in Bezug auf die Anwendung bei der Steuerung von automatischen Getrieben und dgl. am Kraftfahrzeug.

### Bezugszeichenliste

- 1: Drehschalter
- 2: Anzeigeeinrichtung
- 3: Drehbewegungsrichtung
- 4: Radialbewegungsrichtung
- 5: Fahrzeugkonsole

## Patentansprüche

1. Betätigungseinrichtung für ein technisches System, insbesondere für ein shift-by-wire-Gangwechselgetriebe, die Betätigungseinrichtung umfassend
- ein Betätigungselement (1) mit zumindest drei Schaltstellungen, unter denen eine Grundstellung ist, wobei das Betätigungselement (1) zum Auswählen eines Betriebszustands des technischen Systems ausgehend von seiner Grundstellung zumindest in eine Richtung in eine Zwischenschaltstellung auslenkbar ist und zum Auswählen zumindest eines weiteren Betriebszustands des technischen Systems ausgehend von einer Zwischenschaltstellung in zumindest eine weiter als die Zwischenschaltstellung von der Grundstellung entfernte weitere Schaltstellung auslenkbar ist, wobei das Betätigungselement ein Drehschalter (1) ist, der sich aus allen Schaltstellungen selbsttätig in die Grundstellung zurückstellt, und zur Anwahl der Betriebszustände in eine Drehbewegungsrichtung (3) auslenkbar ist und der im Wesentlichen linear entlang zumindest einer weiteren Bewegungsrichtung (4) bewegbar ist, die von der Drehbewegungsrichtung (3) verschieden ist,
- eine Sperranordnung gegen ungewollte Auslenkung des Drehschalters ausgehend von einer Zwischenschaltstellung in eine weitere Schaltstellung
**dadurch gekennzeichnet, dass**
dass die Sperranordnung eine Kulisseneinrichtung umfasst, die zur Auslenkung des Drehschalters (1) entlang der Drehbewegungsrichtung (3) ausgehend von einer Zwischenschaltstellung in eine weitere Schaltstellung eine Auslenkung des Drehschalters (1) entlang der zumindest einen weiteren Bewegungsrichtung (4) erfordert.

2. Betätigungseinrichtung nach Anspruch 1,
**dadurch gekennzeichnet,**
**dass** die Sperranordnung eine Einrichtung zur Bereitstellung einer Gegenkraft umfasst, die bei einer Auslenkung des Drehschalters (1) ausgehend von einer Zwischenschaltstellung in eine weitere Schaltstellung eine größere Gegenkraft bereitstellt als bei der Auslenkung des Drehschalters (1) in die Zwischenschaltstellung.

3. Betätigungseinrichtung nach einem der Ansprüche 1 oder 2,
**dadurch gekennzeichnet,**
**dass** die Betätigungseinrichtung mit einer separaten Anzeigeeinrichtung (2) verbunden ist.

4. Betätigungseinrichtung nach einem der Ansprüche 1 bis 2,
**dadurch gekennzeichnet,**
**dass** die Betätigungseinrichtung eine Anzeigeeinrichtung (2) umfasst.

5. Betätigungseinrichtung nach Anspruch 3 oder 4,
**dadurch gekennzeichnet,**
**dass** die Anzeige sowohl des gegenwärtigen Betriebszustands des Systems als auch der weiteren anwählbaren Betriebszustände jeweils an einer eigenen, festgelegten Stelle der Anzeigeeinrichtung (2) erfolgt.

## Claims

1. Actuating device for a technical system, in particular for a shift-by-wire change gear unit, the actuating device comprising
- an actuating element (1) having at least three shift positions, among which there is a normal position, wherein the actuating element (1) for selecting an operating state of the technical system is deflectable from its normal position at least in one direction into an intermediate shift position and for selecting at least one further operating state of the technical system is deflectable from an intermediate shift position into at least one further shift position that is further remote from the normal position than the intermediate shift position, wherein the actuating element is a rotary switch (1), which resets itself from all shift positions automatically into the normal position and for selecting the operating states is deflectable in a direction of rotational movement (3) and which is movable substantially linearly in at least one further direction of motion (4) that is different from the direction of rotational movement (3),
- a blocking arrangement preventing accidental deflection of the rotary switch from an intermediate shift position into a further shift position,
**characterized in that**
**that** the blocking arrangement comprises a gate device, which for deflection of the rotary switch (1) in the direction of rotational movement (3) from an intermediate shift position into a further shift position requires a deflection of the rotary switch (1) in the at least one further direction of motion (4).

2. Actuating device according to claim 1,
**characterized in**
**that** the blocking arrangement comprises a device for supplying a counterforce, which during a deflection of the rotary switch (1) from an intermediate shift position into a further shift position supplies a greater counterforce than during the deflection of the rotary switch (1) into the intermediate shift position.

3. Actuating device according to one of claims 1 or 2,
**characterized in**
**that** the actuating device is connected to a separate display device (2).

4. Actuating device according to one of claims 1 to 2,
**characterized in**
**that** the actuating device comprises display device (2).

5. Actuating device according to claim 3 or 4,
**characterized in**
**that** the display both of the current operating state of the system and of the further selectable operating states is effected in each case at a proper, fixed point of the display device (2).

## Revendications

1. Dispositif d'actionnement pour un système technique, en particulier pour une boîte de vitesses shift-by-wire, le dispositif d'actionnement comprenant
- un élément d'actionnement (1) avec au moins trois positions de commutation parmi lesquelles se trouve une position de base, l'élément d'actionnement (1) pouvait être dévié, partant de sa position de base, au moins dans une direction, dans une position de commutation intermédiaire, pour la sélection d'un état de fonctionnement du système technique, et, partant d'une position de commutation intermédiaire, pouvant être dévié dans au moins une autre position de commutation plus éloignée de la position de base que la position de commutation intermédiaire, pour la sélection d'au moins un autre état de fonctionnement du système technique, l'élément d'actionnement étant un commutateur tournant (1) qui se replace automatiquement dans la position de base à partir de toutes les positions de commutation, et qui, pour la sélection des états de fonctionnement, peut être dévié dans une direction de mouvement de rotation (3), et est déplaçable sensiblement linéairement le long d'au moins une autre direction de déplacement (4) qui est différente de la direction de mouvement de rotation (3),
- un dispositif de blocage contre une déviation involontaire du commutateur tournant, à partir d'une position de commutation intermédiaire dans une autre position de commutation,
**caractérisé en ce que**
le dispositif de blocage comprend un dispositif à coulisse qui, pour la déviation du commutateur tournant (1) le long de la direction de mouvement de rotation (3), partant d'une position de commutation intermédiaire dans une autre position de commutation, exige une déviation du commutateur tournant (1) le long de la au moins une autre direction de déplacement (4).

2. Dispositif d'actionnement selon la revendication 1,
**caractérisé**
**en ce que** le dispositif de blocage comprend un dispositif pour fournir une force antagoniste qui, lors d'une déviation du commutateur tournant (1), à partir d'une position de commutation intermédiaire dans une autre position de commutation, fournit une force antagoniste plus grande que lors de la déviation du commutateur tournant (1) dans la position de commutation intermédiaire.

3. Dispositif d'actionnement selon l'une quelconque des revendications 1 ou 2,
**caractérisé**
**en ce que** le dispositif d'actionnement est relié à un dispositif d'affichage (2) séparé

4. Dispositif d'actionnement selon l'une quelconque des revendications 1 à 2,
**caractérisé**
**en ce que** le dispositif d'actionnement comprend un dispositif d'affichage (2).

5. Dispositif d'actionnement selon la revendications 3 ou 4,
**caractérisé**
**en ce que** l'affichage de l'état de fonctionnement actuel du système ainsi que des autres états de fonctionnement à sélectionner s'effectue dans chaque cas en un emplacement défini, particulier, du dispositif d'affichage (2).
